# EUROPEAN PATENT SPECIFICATION

(11) **EP 3 817 222 B1**
(45) Date of publication and mention of the grant of the patent: **13.12.2023**
(21) Application number: 18924392.6
(22) Date of filing: 28.06.2018
(51) Int. Cl.: H02S 40/10, B08B 1/04, B08B 1/00, F24S 40/20

(54) **SOLAR PANEL CLEANING SYSTEM**
REINIGUNGSSYSTEM FÜR SOLARPANEELE
SYSTÈME DE NETTOYAGE DE PANNEAUX SOLAIRES

(43) Date of publication of application: 05.05.2021
(73) Proprietor: FUJI SEIKO CO., LTD., Gifu, 501-6257 (JP); FUJI SHOJI CO., LTD., Gifu, 501-6257 (JP)
(72) Inventor: TANAKA Tatsumi, Hashima-shi, Gifu 501-6257 (JP)
(74) Representative: Winter, Brandl - Partnerschaft mbB
(86) International application number: PCT/JP2018/024685
(87) International publication number: WO 2020/003461

(56) References cited:
- WO-A1-2015/034863
- CN-A- 106 513 352
- JP-A- 2010 161 141
- JP-A- 2011 036 833
- JP-A- 2011 036 833
- JP-A- 2014 180 593
- JP-U- 3 206 753
- JP-U- 3 206 753
- US-B1- 9 130 502

## Description

### Technical Field

The present invention relates to a cleaning system used to clean a solar panel.

### Background Art

In recent years, solar power generation has been considered as one of the power generation using natural energy that does not pollute the environment without depletion as a resource.

In the solar power generation, when light is applied to a cell, which is a single element of a solar cell, light energy is absorbed by the electrons contained in the cell. When light energy is absorbed by the electrons, the light energy is directly converted into electric power by the photovoltaic effect and output to the outside as electric power.

A package in which a plurality of cells are arranged and protected with resin or tempered glass so that the cells can be used outdoors is referred to as a solar panel (module).

Since the solar panel is used outdoors, dirt such as dust, yellow dust, volcanic ash, and bird droppings adheres to the surface. If such dirt is left unattended, solar energy cannot be efficiently absorbed and power generation efficiency is reduced. Therefore, it is important to clean the surface of the solar panel on a regular basis. A large amount of water is required to clean the solar panel, but using tap water and well water, the surface of the solar panel may be corroded by a chemical reaction due to the contained components, or the components may stick to the surface of the solar panel and form a film that hinders the absorption of solar energy.

Therefore, as a cleaning device for cleaning solar panels without using tap water or well water, the one described in PTL 1 is known.

The solar panel cleaning system of PTL 1 describes rails provided along the solar panel, a moving device that moves on the rails, a support shaft provided at an angle with respect to the moving direction of the moving device, and a sponge provided in a cylindrical shape around the support shaft, in which the sponge rotates around the support shaft by contact between the sponge and the solar panel as the moving device moves. Since rainwater is used as the cleaning water, a raindrop sensor is installed to clean the solar panel only on rainy days.

PTL 2 describes a cleaning robot that self-runs on a plurality of solar panels and cleans the light receiving surface.

### Citation List

### Patent Literature

PTL 1: JP2016-016364A
PTL 2: JP2015-144547A
A solar panel cleaning system having the features of the preamble of claim 1 is known from WO 2015/034863 A1.

### Summary of Invention

### Technical Problem

However, since the solar panel cleaning system of PTL 1 depends solely on the rainwater that falls as the water used to clean the solar panels, there is a concern that the water required for cleaning will be insufficient unless a large amount of rain falls. Since the sponge rotates by the contact with the solar panel in the rotation of the sponge, the sponge only touches the surface of the solar panel without any scraping action. Therefore, the dirt adhering to the surface of the solar panel cannot be sufficiently removed.

Since the cleaning robot of PTL 2 performs cleaning work while being mounted on the upper surface of the solar panel, the weight of the cleaning robot is added to the solar panel. Therefore, a load is applied to the solar panel, which may cause deformation of the solar panel or damage to the panel surface.

An object of the present invention, which has been made in view of the above-mentioned problems in the related art, is to provide a solar panel cleaning system that uses rainwater to sufficiently remove dirt adhering to the surface of the solar panel without imposing a load on the solar panel.

### Solution to Problem

In order to solve the above problems, the solar panel cleaning system of the present invention is provided with the features of claim 1. Advantageous embodiments are laid out in the dependent claims. The solar panel cleaning system includes a plurality of solar panels arranged in a row; a pair of rails provided on both sides across the plurality of solar panels and extending in the horizontal direction; a double-column structural frame movably supported on the rails on both sides of the solar panels and arranged to surround the upper surfaces of the solar panels; a moving device for moving the structural frame along the rails; a rotating brush provided on the structural frame, having a rotation center extending in a direction intersecting the direction in which the plurality of solar panels are arranged, and arranged to be able to come into contact with the upper surfaces of the solar panels; a drive device provided on the structural frame to rotate the rotating brush; a water catching unit provided to spread over the upper surface of the structural frame to collect rainwater at the time of rainfall; and a water pouring unit for pouring the rainwater collected by the water catching unit into the rotating brush.

### Advantageous Effects of Invention

Accordingly, rainwater collected in a large catching area by the water catching unit is concentrated and poured into the rotating brush, and the rotating brush is moved on the solar panels while rotating. Therefore, the dirt adhering to the surface of the solar panel can be reliably removed by the rotating brush that rotates while sufficient cleaning water with rainwater is supplied. Since rainwater is stored by the water catching unit provided in the structural frame, the load when the rainwater is stored is not applied to the solar panel and it is possible to prevent deformation of the solar panel and damage to the panel surface.

### Brief Description of Drawings

[Fig. 1] Fig. 1 is a schematic diagram showing a solar panel cleaning device used in the solar panel cleaning system of the present invention, as viewed from the front.
[Fig. 2] Fig. 2 is a schematic diagram showing the solar panel cleaning device as viewed from the side surface.
[Fig. 3] Fig. 3 is a schematic plan view showing the upper part of the solar panel cleaning device as viewed from above.
[Fig. 4] Fig. 4 is a schematic diagram showing the operation of a parallel link mechanism that supports a rotating brush.
[Fig. 5] Fig. 5 is a schematic plan view showing the lower part of the solar panel cleaning device as viewed from above.
[Fig. 6] Fig. 6 is an explanatory view showing the movement of a panel support member that tilts a solar panel.
[Fig. 7] Fig. 7 is an explanatory view showing the movement of a locking device operation unit when tilting the solar panel.
[Fig. 8] Fig. 8 is a schematic diagram showing the overall structure of the solar panel cleaning system in which a plurality of solar panels are arranged and a traverser device is arranged.
[Fig. 9] Fig. 9 is a schematic diagram showing the solar panel cleaning system as viewed from the side.
[Fig. 10] Fig. 10 is an explanatory view showing the movement of the solar panel cleaning device.

### Description of Embodiments

### (First Embodiment)

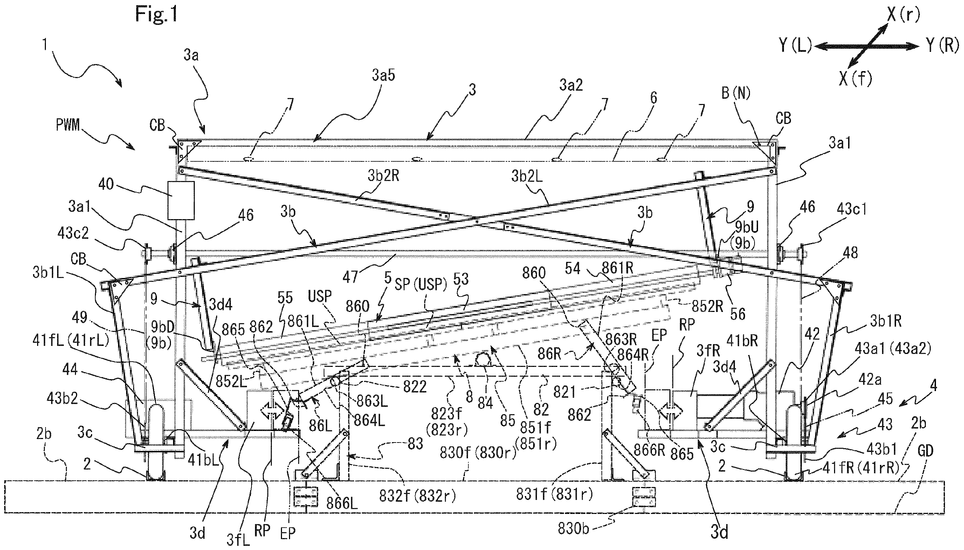

The solar panel cleaning system according to the present invention will be described below with reference to Figs. 1 to 10. A solar panel cleaning system 1 includes solar panels SP, rails (lane) 2, a structural frame 3, a moving device 4, a rotating brush 5, a water catching unit 6, a water pouring unit 7, and mounts 8.

A solar panel cleaning device PWM is configured by the structural frame 3, the moving device 4, the rotating brush 5, the water catching unit 6, and the water pouring unit 7.

### (Solar Panel)

For example, the solar panel SP uses crystalline silicon as a solar cell and uses a module formed in a rectangular plate shape. In the present embodiment, four solar panels SP are arranged side by side to form a solar panel unit USP, and each unit is laid down and fixed to one mount 8 (described later). A plurality of solar panel units USP are continuously arranged in a straight line in a row. The plurality of solar panel units USP linearly arranged in a row correspond to a plurality of solar panels arranged in a row. The direction in which the plurality of solar panel units USP are arranged corresponds to the direction in which the plurality of solar panels SP are arranged.

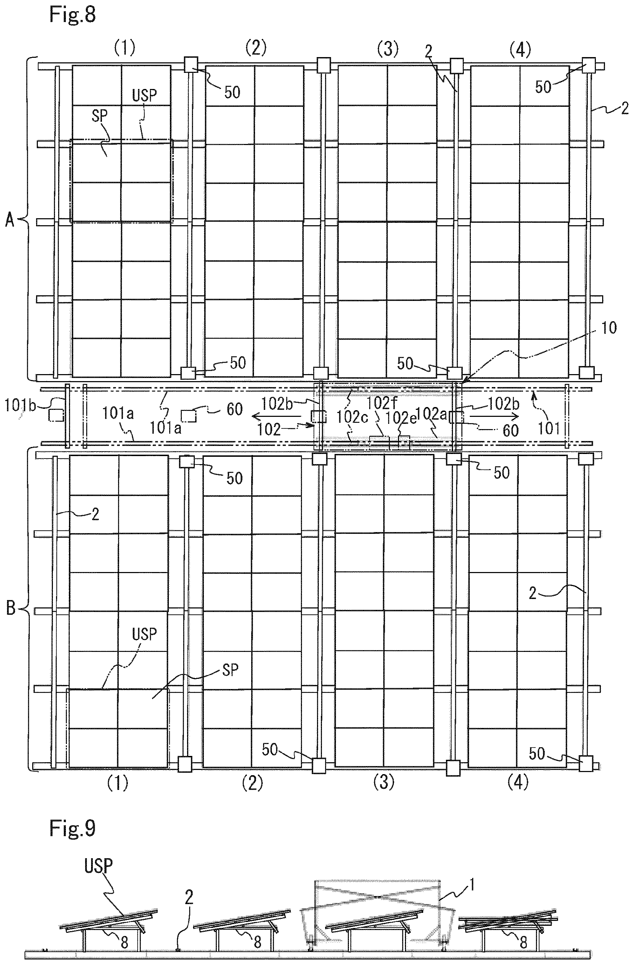

In the present embodiment, as shown in Figs. 8 and 9, the solar panel units USP arranged in four rows are arranged separately in the A section and the B section.

In the present specification, the direction in which a plurality of solar panel units USP are arranged is referred to as the X direction and the horizontal direction orthogonal to the X direction is referred to as the Y direction. "Inside" means a side closer to the center within a predetermined range. "Outside" means a side far from the center in a predetermined range. In Fig. 1, the right side is represented by R, the left side is represented by L, the front side in Fig. 1 is represented by front f, and the other side in Fig. 1 is represented by rear r.

### (Rail)

As shown in Fig. 8, a pair of rails 2 extend along the X direction in which a plurality (in the present embodiment, one row of four, two groups of A and B sections) of solar panel units USP are arranged and provided on the ground on both sides across the solar panels USP. The rail 2 is, for example, a groove rail formed of an iron member and having a concave groove 2a whose upper surface continuously opens along the longitudinal direction. The lower end of the rail 2 is fixed to, for example, a plurality of sleepers 2b made of, for example, an H-shaped steel member arranged on the ground along the direction (X direction) in which the plurality of solar panel units USP are arranged. The shape and dimensions of the concave groove 2a are provided so that tires 41fR, 41fL, 41rR, and 41rL of the structural frame 3 described later rotate along the concave groove 2a.

Position sensors 50 are provided at the respective positions corresponding to the ends of the rails 2, detect the position on the rail 2 of the solar panel cleaning device PWM, and transmit signals to a control device 40 for the purpose of stopping the moving device 4 described later, moving in the reverse direction, and the like. The position sensors are arranged, for example, at the starting end (upper end in Fig. 8) and the finishing end (lower end in Fig. 8) of the first to fourth rows in the A and B sections, as the positions corresponding to the ends of the respective rails 2.

### (Structural Frame)

The structural frame 3 is formed of, for example, angle steel member and includes a structural frame main body unit 3a and an auxiliary support member unit 3b. The structural frame main body unit 3a includes support columns 3a1, horizontal members 3a2, lower lateral members 3a3, and upper lateral members 3a4. The structural frame 3 is movably supported on the rails 2 on both sides of the solar panel units USP, is arranged to surround the upper surfaces of the solar panel units USP, and is formed in a gate shape as a whole.

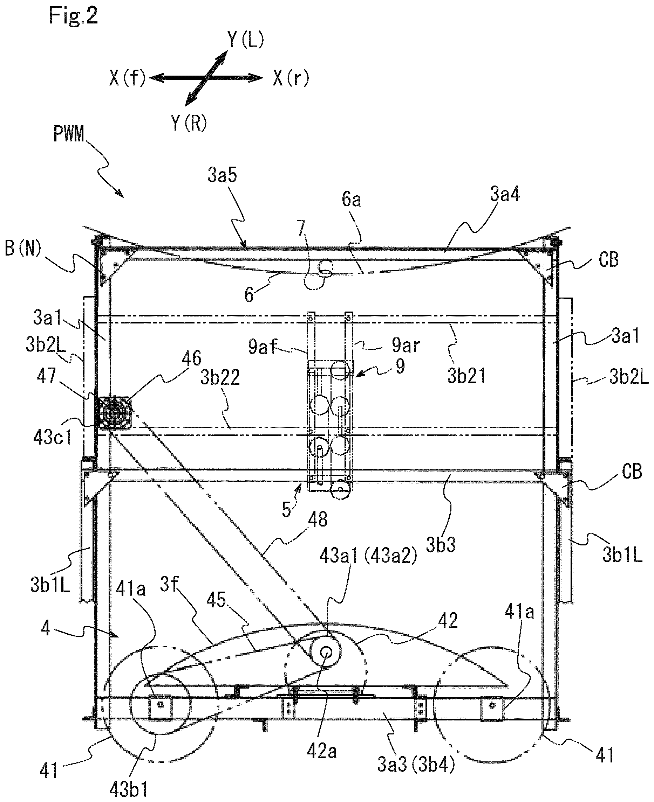

Two pairs of support columns 3a1 extend vertically on both sides of the solar panel units USP and are erected side by side in the X direction. As shown in Fig. 1, the horizontal members 3a2 are respectively laid horizontally between the upper ends (Y direction) of the support columns 3a1 that face each other. As shown in Fig. 2, the lower lateral member 3a3 is provided between the lower parts of the two support columns 3a1 along the X direction. As shown in Fig. 2, the upper lateral member 3a4 is provided between the upper parts of the two support columns 3a1 along the X direction. Triangular plate-shaped corner metal fittings CB are fixed to the joint portion between the support column 3a1 and the horizontal member 3a2 and the joint portion between the support column 3a1 and the upper lateral member 3a4 with bolts B and nuts N, respectively, to prevent deformation of the joint portion.

In Fig. 1, the auxiliary support member unit 3b includes inclined vertical members 3b1R and 3b1L on the right and left sides, inclined horizontal members 3b2R and 3b2L on the right and left sides, upper horizontal auxiliary members 3b3, and lower horizontal auxiliary members 3b4 (See Figs. 1 and 2). As shown in Fig. 1, a pair of right side inclined vertical members 3b1R are erected from positions outside the support columns 3a1 by a predetermined distance along the Y direction and are provided such that the upper portions thereof are slightly inclined outward from the vertical direction. A pair of right side inclined horizontal members 3b2R are provided to extend from the upper ends of the right side inclined vertical members 3b1R toward the opposite support columns 3a1 in the direction perpendicular to the virtual vertical plane. In Fig. 1, the inclined vertical members 3b1L and the inclined horizontal members 3b2L on the left side are provided symmetrically with the inclined vertical members 3b1R and the inclined horizontal members 3b2R and have the same structure, and thus the descriptions thereof will be omitted.

As shown in Fig. 2, the upper horizontal auxiliary member 3b3 is laid horizontally between the upper parts of the inclined vertical members 3b1L facing in the X direction (between the lower parts of the inclined horizontal members 3b2L) to be provided parallel to the upper lateral member 3a4. The lower horizontal auxiliary member 3b4 is laid horizontally between the lower parts of the inclined vertical members 3b1L facing in the X direction to be provided parallel to the horizontal member 3a2. In the inclined vertical member 3b1R and the inclined horizontal member 3b2R, the upper horizontal auxiliary member 3b3 and the lower horizontal auxiliary member 3b4 are similarly provided.

### (Moving Device)

As shown in Fig. 1, the moving device 4 includes the tires 41fR, 41fL, 41rR, and 41rL, an electric drive motor 42, a torque transmission device 43, and the control device 40.

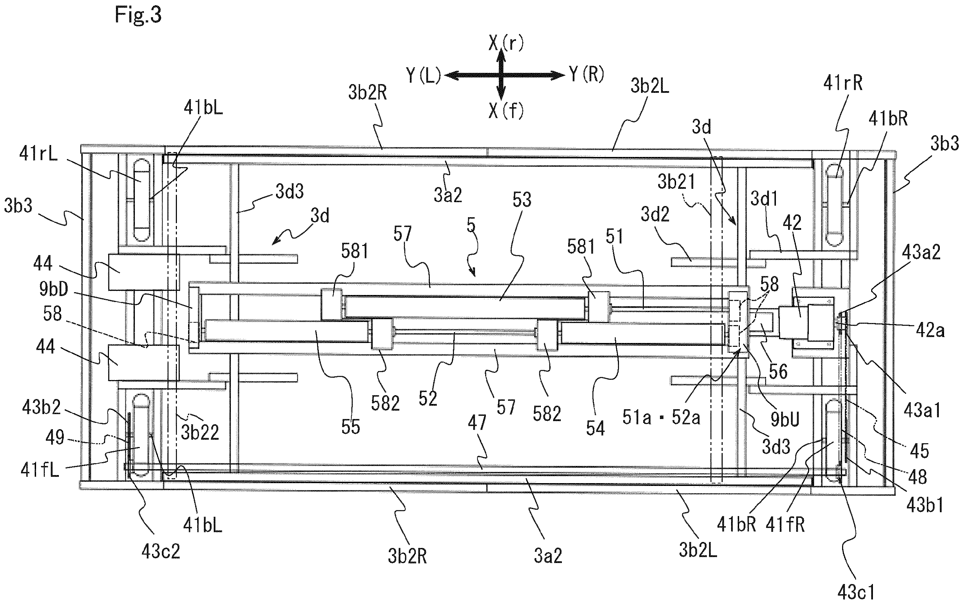

Two pairs of bearing units 41a are provided on the lower lateral member 3a3 and the lower horizontal auxiliary member 3b4 (see Fig. 2), respectively. The tires 41fR, 41fL, 41rR, and 41rL including rotary shafts 41bR and 41bL extending in the Y direction are rotatably supported on each bearing unit 41a. The tires 41fR, 41fL, 41rR, and 41rL are, for example, solid type rubber tires. The tires 41fR, 41fL, 41rR, and 41rL enter the concave groove 2a of the rail 2 and rotate along the extending direction of the rail 2. A first driven sprocket 43b1 is integrally fixed to the rotary shaft 41bR, which is one of the rotary shafts 41bR and 41bL (right side in Fig. 1 and front right side in Fig. 3) arranged in parallel.

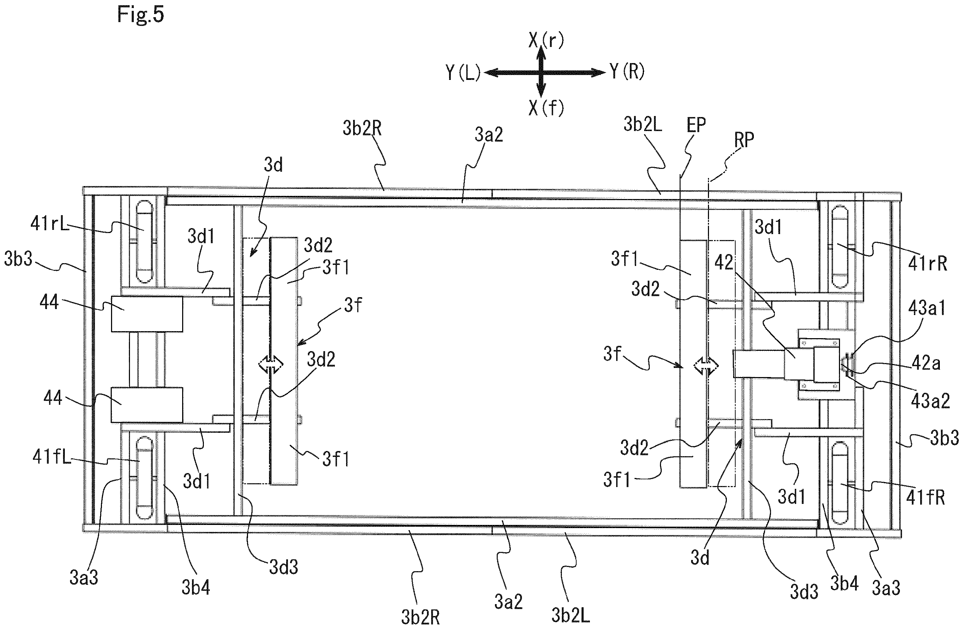

In Figs. 1 and 5, the electric drive motor 42 is fixed to the lower lateral member 3a3 and the lower horizontal auxiliary member 3b4 on the right side to straddle both members. The electric drive motor 42 is, for example, a DC motor driven by a battery 44, and a first drive sprocket 43a1 and a second drive sprocket 43a2 are integrally fixed to an output shaft 42a of the electric drive motor 42 (see Fig. 5).

The first drive sprocket 43a1 and the second drive sprocket 43a2 have the same number of external teeth around the sprocket. The rechargeable battery 44 is fixed between the lower lateral member 3a3 and the lower horizontal auxiliary member 3b4 on the left side so that the electric drive motor 42 can be energized. A first roller chain 45 is mounted between the first drive sprocket 43a1 and the first driven sprocket 43b1 so that the rotational torque of the electric drive motor 42 is transmitted to the front right side tire 41fR (see Figs. 1 and 3) . The drive of the electric drive motor 42 is controlled by the control device 40. The control device 40 is provided on the upper part of the support column 3a1 of the front left side.

As shown in Figs. 1 and 2, bearings 46 are provided to face each other in the middle portion of the support columns 3a1 erected in pairs in the front. A transmission rotary shaft 47 for transmitting torque extends in the Y direction and is rotatably supported on the bearing 46. A first conduction sprocket 43c1 and a second conduction sprocket 43c2 are integrally fixed to both ends of the transmission rotary shaft 47, respectively. A second roller chain 48 is mounted between the second drive sprocket 43a2 (see Fig. 3) and the first conduction sprocket 43c1 on the right side.

A second driven sprocket 43b2 is integrally fixed to the rotary shaft 41bL of the front left side tire 41fL. A third roller chain 49 is mounted between the second conduction sprocket 43c2 and the second driven sprocket 43b2. The number of teeth of the first and second conduction sprockets 43c1 and 43c2 is the same. The number of teeth of the first driven sprocket 43b1 and the number of teeth of the second driven sprocket 43b2 are the same. By setting such a number of teeth, the front right side tire 41fR and the front left side tire 41fL rotate in synchronization with each other.

A pair of auxiliary support member units 3b are provided on the structural frame main body units 3a to face both sides of the solar panel units USP. The auxiliary support member unit 3b enhances the rigidity of the structural frame 3 as a brace. The lower ends of the support columns 3a1 and the lower ends of the inclined vertical members 3b1R and 3b1L are connected by foundation horizontal members 3c. A support frame 3d includes a base support frame 3d1, a distal end support frame 3d2, a lateral support frame 3d3 (see Fig. 5), and an inclined support frame 3d4 (see Fig. 1) .

The base support frame 3d1 and the distal end support frame 3d2 are each formed of angle steel member and are joined at the side surface by welding, for example. The base support frame 3d1 connects the lower lateral member 3a3 and the lower horizontal auxiliary member 3b4, protrudes inward by a predetermined length along the Y direction, and is arranged so that the lower surface thereof becomes a flat portion having an L-shaped cross section. The distal end support frame 3d2 is provided inside the base support frame 3d1 on the distal end side and is arranged so that the upper surface thereof becomes a flat portion having an L-shaped cross section turned upside down.

The inclined support frame 3d4 is formed of, for example, angle steel member. The inclined support frame 3d4 has the upper end fixed to the lower part of the support column 3a1 by, for example, bolts and nuts, and the lower end fixed to protrude inward in the Y direction at a tilt angle of 45 degrees from the vertical (see Fig. 1). The inclined support frame 3d4 is provided on each of the four support columns 3a1, and the lateral support frame 3d3 is laid horizontally between the lower ends of the inclined support frames 3d4 facing in the X direction, for example, by bolts and nuts.

The lateral support frame 3d3 is fixed to the upper surface of the distal end support frame 3d2 on the base end side, for example, with bolts and nuts.

The distal end support frame 3d2 is provided with an engaging metal fitting (not shown). The engaging metal fittings are configured to engage with the engaged metal fittings provided on contacted portions 3fR and 3fL (described later) to support the contacted portions 3fR and 3fL to be slidable and fixable in the Y direction.

As shown in Fig. 2, the left side inclined horizontal member 3b2L of the auxiliary support member unit 3b is provided with an upper beam member 3b21 laid horizontally on the inclined upper side of the inclined horizontal member 3b2L, and a lower beam member 3b22 laid horizontally on the inclined lower side of the inclined horizontal member 3b2L. The upper beam member 3b21 and the lower beam member 3b22 are each provided with a parallel link mechanism 9 that hangs the rotating brush 5 described later to be swingable.

### (Parallel Link Mechanism)

Since the parallel link mechanism 9 provided on the upper beam member 3b21 and the parallel link mechanism 9 provided on the lower beam member 3b22 have the same structure, the parallel link mechanism 9 of the upper beam member 3b21 will be described as a representative.

For example, the upper ends of a pair of front and rear hanging link members 9af and 9ar formed of angle steel member are rotatably connected to the upper beam member 3b21 by a connecting shaft 9a1 at a predetermined interval L2. A rectangular support plate 9bU is rotatably connected to the lower ends of the hanging link members 9af and 9ar by a connecting shaft 9d. The hanging link members 9af and 9ar are configured to rotate in a virtual plane (a plane parallel to the inclined vertical members 3b1R and 3b1L) that intersects the inclined horizontal members 3b2L at right angles. A distance L1 between the centers of the connecting shafts 9d and the predetermined interval L2 (distance L2 between the centers of the connecting shafts 9a1) of the upper beam member 3b21 facing the support plate 9bU are formed to have the same length. The paired hanging link members 9af and 9ar are also formed with the same length dimension. As a result, the parallel link mechanism 9 is configured. The portion of the upper beam member 3b21 at the predetermined interval L2 corresponds to the fixed node of the parallel link mechanism 9.

The lengths of the hanging link members 9af and 9ar are set such that when the rotating brush 5, which will be described later, is hung, first, second, and third brush units 53, 54, and 55 come into contact with the surface of the solar panel SP on the mount 8, and the first, second, and third brush units 53, 54, and 55 do not enter below the solar panel SP.

### (Retracting Device)

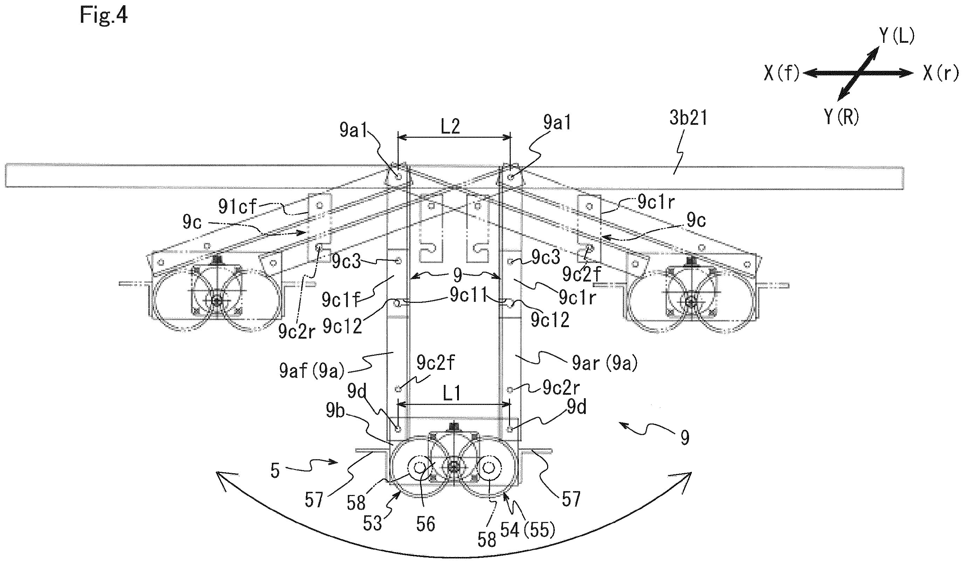

The hanging link member 9a (9af and 9ar) is provided with a retracting device 9c that holds the rotating brush 5, which will be described later, separated upward from the solar panel SP, which is the cleaning target. The retracting device 9c includes a rear retracted position used when the hanging link members 9af and 9ar are swung to the right side (rear side) in Fig. 4, and a forward retracted position used when the hanging link members 9af and 9ar are swung to the left side (front side) in Fig. 4.

Each of the hanging link members 9af and 9ar rotates about the connecting shaft 9a1 but the support plate 9bU swings. In the rear retracted position, positioning is performed by engaging a locking plate member 9c1r rotatably provided on the upper part of the hanging link member 9ar on the rear (right side in Fig. 4) and a locked projection 9c2f provided on the lower part of the hanging link member 9af on the front (left side in Fig. 4) with each other. The locking plate member 9c1r is formed with a locking groove 9c11 in which the front hanging link member 9af side is opened and the locked projection 9c2f on the front side enters, and a hemispherical locking fastener 9c12 is formed in the back of the locking groove 9c11.

In the left retracted position, positioning is performed by engaging a locking plate member 9c1f provided to be swingable on the upper part of the hanging link member 9af on the front (left side in Fig. 4) and a locked projection 9c2r provided on the lower portion of the hanging link member 9ar in the rear (right side in Fig. 4) with each other. The locking plate member 9c1f is formed with the locking groove 9c11 in which the rear hanging link member 9ar side is opened and the locked projection 9c2r on the rear side enters, and a hemispherical locking fastener 9c12 is formed in the back of the locking groove 9c11.

### (Rotating Brush)

As shown in Fig. 3, the rotating brush 5 includes a first rotary support shaft 51, a second rotary support shaft 52, a brush frame 57, the first brush unit 53, the second brush unit 54, and the third brush unit 55. The first rotary support shaft 51 and the second rotary support shaft 52 have rotation centers extending in a direction orthogonal to the X direction. The first rotary support shaft 51 and the second rotary support shaft 52 are arranged in parallel with each other.

Both ends of the support plate 9bU on the upper beam member 3b21 side and a support plate 9bD on the lower beam member 3b22 side are connected in the horizontal direction by the brush frame 57 facing in the X direction. The brush frame 57 is formed of, for example, angle steel member and extends parallel to the inclined horizontal member 3b2L.

The first rotary support shaft 51 is rotatably supported by a bearing unit 58 provided on the support plate 9bU on the upper beam member 3b21 side and first intermediate bearing units 581 provided at two positions (a position of about one-fourth and a position of about three-fourths of the length of the brush frame 57 with reference to the support plate 9bU) of the middle portion of the rear side brush frame 57. Between the two first intermediate bearing units 581 of the first rotary support shaft 51, the first brush unit 53 is provided that protrudes in the radial direction of the first rotary support shaft 51 and is formed in a cylindrical shape with a predetermined width in the axial direction. The first brush unit 53 is, for example, a so-called roll brush in which a large number of polypropylene straight bristles protrude in the radial direction.

The second rotary support shaft 52 is rotatably supported by the front side bearing unit 58 provided on the support plate 9bU on the upper beam member 3b21 side, the front bearing unit 58 provided on the support plate 9bD on the lower beam member 3b22 side, second intermediate bearing units 582 provided at two positions (a position of about one-third and a position of about two-thirds of the length of the brush frame 57 with reference to the support plate 9bU) of the middle portion of the front side brush frame 57.

The second brush unit 54 is provided between the front side bearing unit 58 and the second intermediate bearing unit 582 on the upper beam member 3b21 side. The second brush unit 54 protrudes in the radial direction of the second rotary support shaft 52 and is formed in a cylindrical shape with a predetermined width in the axial direction to partially overlap the first brush unit 53. The second brush unit 54 is a roll brush similar to the first brush unit 53.

The third brush unit 55 is provided between the front side bearing unit 58 and the second intermediate bearing unit 582 on the lower beam member 3b22 side. The third brush unit 55 protrudes in the radial direction of the second rotary support shaft 52 and is formed in a cylindrical shape with a predetermined width in the axial direction to partially overlap the first brush unit 53. The third brush unit 55 is a roll brush similar to the first brush unit 53.

The first brush unit 53, the second brush unit 54, and the third brush unit 55 are configured to come into contact along the surface of the tilted solar panel SP by the weight of the rotating brush 5 when arranged downward by the parallel link mechanism 9.

An electric motor 56 (drive device) is fixed to the bearing unit 58 on the upper beam member 3b21 side of the first rotary support shaft 51. The first rotary support shaft 51 is connected to the output shaft (not shown) of the electric motor 56 via a speed reducer (not shown) so that rotational torque can be transmitted. First external gears 51a, which are spur gears, are provided around the first rotary support shaft 51 at both ends. The second rotary support shaft 52 is configured such that second external gears 52a, which are spur gears, are provided around both ends thereof and mesh with the first external gears 51a. When the first rotary support shaft 51 rotates the first brush unit 53 by the drive of the electric motor 56, the second rotary support shaft 52 rotates in the reverse direction due to the meshing of the first external gear 51a and the second external gear 52a and rotate the second brush unit 54 and the third brush unit 55 in the reverse direction with respect to the first brush unit 53. The drive of the electric motor 56 is controlled by the control device 40.

### (Water Catching Unit and Water Pouring Unit)

As shown in Fig. 2, the water catching unit 6 is provided on a ceiling portion 3a5 formed in the upper part between the four support columns 3a1 of the structural frame 3. The water catching unit 6 is formed of, for example, flexible vinyl chloride corrugated plate member and is curved to lie down on the ceiling portion 3a5 and to form a recess 6a in the central portion in the X direction. The cross section when cut along the Y direction is wavy. As shown in Fig. 1, the recess 6a is provided with a plurality (four in the present embodiment) of through holes arranged in the Y direction to form the water pouring unit 7. The through holes of the water pouring unit 7 are arranged to face each other along the first brush unit 53, the second brush unit 54, and the third brush unit 55 of the rotating brush 5.

### (Mount)

As shown in Fig. 1, the mount 8 includes a fixed support member 83 fixedly supported on an installation surface GD, a horizontal support frame 82 supported by the fixed support member 83, a support shaft 84 provided on the horizontal support frame 82, a panel support member 85 rotatably supported by the support shaft 84, and stopper members 86R and 86L for stopping the rotation of the panel support member 85 at a predetermined tilt angle position.

The fixed support member 83 includes two pedestals 830f and 830r placed at a predetermined distance in the X direction, a pair of first support columns 831f and 831r erected on the other end side (right side) of the respective pedestals 830f and 830r, a pair of second support columns 832f and 832r erected on one end side (left side) of the respective pedestals 830f and 830r and provided at the same height as the first support columns 831f and 831r. The pedestals 830f and 830r are fixed to the sleepers 2b of the H-shaped steel member of the rail 2 described above by brackets 830b.

The horizontal support frame 82 includes a first lateral member 821 laid horizontally between the pair of first support columns 831f and 831r, a second lateral member 822 laid horizontally between the pair of second support columns 832f and 832r, and a pair of horizontal members 823f and 823r laid horizontally respectively between both ends of the first lateral member 821 and the second lateral member 822. The first lateral member 821 and the second lateral member 822 are formed of, for example, steel rod members having a hollow circular cross section.

On the upper surface of the intermediate portion of the pair of horizontal members 823f and 823r, for example, the support shaft 84 made of a steel rod member having a solid circular cross section is fixed by either brackets or screws (not shown) that support the outer circumference of the support shaft 84. The support shaft 84 is supported to extend along a direction parallel to the first and second lateral members 821 and 822.

The panel support member 85 extends in a direction parallel to a pair of rotating rod members 851f and 851r (corresponding to two opposing sides) supported at the central portion of the support shaft 84 and the first and second lateral members 821 and 822, and is formed in a square shape by a pair of panel fixing members 852R and 852L laid horizontally on both ends of the rotating rod members 851f and 851r. Bearing members (not shown) that come into contact with the outer circumferential surface of the support shaft 84 are provided on the lower surfaces of the central portions of the rotating rod members 851f and 851r. The bearing members are rotatably supported on the outer circumference of the support shaft 84 by strip-shaped holding units and screws (not shown). Four solar panels SP are fixed to the panel fixing members 852R and 852L, for example, with bolts.

### (Stopper Member (Locking Device))

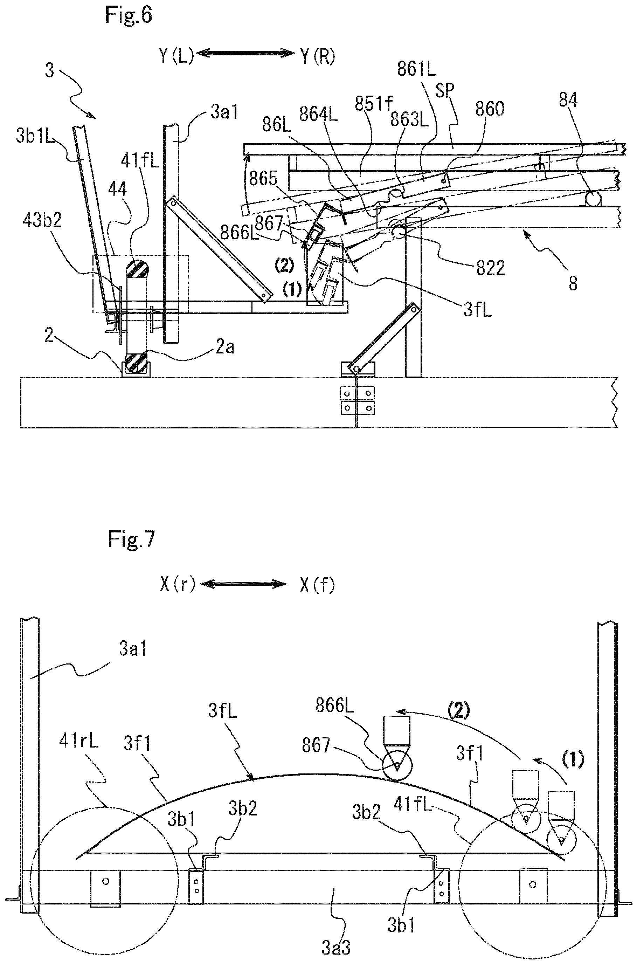

Stopper members 86R and 86L as locking devices are provided on both end sides of the respective rotating rod members 851f and 851r. The stopper members 86R and 86L include a pair of elongated plate-shaped units 861R and 861L that are arranged to face each other, and a connecting member 862 that connects the distal ends of the elongated plate-shaped units 861R and 861L in the X direction. As the connecting member 862, for example, angle steel member is used. As shown in Figs. 1 and 6, the base end portions of the elongated plate-shaped units 861R and 861L of the stopper members 86R and 86L are rotatably connected to the rotating rod members 851f and 851r by pins 860.

As shown in Figs. 1 and 6, an engaging recess 863L and a shallow engaging recess 864L are formed on the lower surface of the left side elongated plate-shaped unit 861L. As shown in Fig. 1, an engaging recess 863R and a shallow engaging recess 864R are also formed on the lower surface of the right side elongated plate-shaped unit 861R. Each of the engaging recesses 863L and 863R is notched in a semicircular shape to engage a half circumference of the outer circumferences of the first and second lateral members 821 and 822. Each of the shallow engaging recesses 864R and 864L is notched in a quarter-conferential shape to engage less than half the circumference of the outer circumferences of the first and second lateral members 821 and 822, for example, a quarter circumference.

When the engaging recess 863R on the right side engages with the first lateral member 821, the shallow engaging recess 864L on the left side is configured to engage with the second lateral member 822. When the engaging recess 863L on the left side engages with the second lateral member 822, the shallow engaging recess 864R on the right side is configured to engage with the first lateral member 821.

When the panel support member 85 tilts, the lower surfaces of the elongated plate-shaped units 861R and 861L come in contact with the upper outer circumferential surfaces of the first and second lateral members 821 and 822 due to the weight of the stopper members 86R and 86L, as shown in Fig. 6, and move relative to each other in the contacted state. Then, when the engaging recess 863R or the engaging recess 863L is indexed from the first and second lateral members 821 and 822, the stopper members 86R and 86L rotate by their own weight around the pin 860 at one end and engage with the first lateral member 821 or the second lateral member 822. The position where the engaging recess 863R engages with the first lateral member 821 is set to 0 degrees when the panel support member 85 is horizontal. The position where the engaging recess 863L engages with the second lateral member 822 is set at a position where the right side of the panel support member 85 is inclined 10 degrees downward from the horizontal.

### (Locking Device Operation Unit)

In a connecting member 862 that connects the distal end of the right side stopper member 86R and the connecting member 862 that connects the distal end of the left side stopper member 86L, wheels 866R and 866L that are rotatably supported by axles 867 supported by support fittings 865 are provided respectively. The wheels 866R and 866L are provided at the central portion of the connecting member 862 in the X direction to project downward, respectively. The wheels 866R and 866L are supported not to be movable relative to the stopper members 86R and 86L via the connecting member 862. The wheels 866R and 866L are configured to come into contact with a surface extending horizontally in the Y direction (an arcuate surface 3f1 of the contacted portions 3fR and 3fL described later) and rotate the stopper members 86R and 86L. The contact portion is configured of the support fittings 865, the axles 867, and the wheels 866R and 866L.

The distal end support frames 3d2 of the support frames 3d on both the left and right sides of the structural frame 3 are respectively provided with the semi-cylindrical contacted portions 3fR and 3fL extending in the Y direction with a predetermined width and having, on the upper part, the arcuate surface 3f1 of which a central axis of curvature extends in the Y direction. The arcuate surface 3f1 corresponds to the inclined contact surface. Engaged fittings (not shown) are provided at the bottom of the contacted portions 3fR and 3fL and are engaged with engaging fittings (not shown) provided on a pair of distal end support frames 3d2 (see Fig. 5) extending in the Y direction to be able to slide in the Y direction.

The contacted portions 3fR and 3fL are configured to be movable between an angle change execution position EP in which the inclined contact surface (arcuate surface 3f1) contacts the wheels 866R and 866L of the corresponding contact portions, and a retracted position RP in which the wheels 866R and 866L do not contact the inclined contact surface (arcuate surface 3f1). In the present embodiment, the moving between the angle change execution position EP and the retracted position RP is manually made.

The locking device operation unit is mainly configured of the contact portion (the support fittings 856, the wheels 866R and 866L, and the axles 867) and the contacted portions 3fR and 3fL.

### (Traverser Device)

In the solar panel cleaning system 1, a plurality of solar panel units USP are arranged in four rows along the X direction and divided into two groups. The rails 2 are arranged parallel to the row on both sides of each row in which the solar panel units USP are arranged. Only one lane of the rail 2 is provided between adjacent rows of the solar panel units USP. Out of the rails 2 used when the solar panel cleaning device performs cleaning work on a row of the solar panel units USP, the rail between the row and a row adjacent to that row is also used when the cleaning device performs cleaning work on the row adjacent to that row.

A traverser device 10 includes crossing rails 101 extending at a right angle to the rails 2 and a mounting base 102 moving on the crossing rails 101.

A pair of crossing rails 101 are provided between two groups of four rows each to extend in the Y direction to be perpendicular to the rails 2 respectively provided along the rows of the solar panel units USP. Each crossing rail 101 is, for example, a groove rail formed of an iron member and formed with a concave groove 101a of which an upper surface continuously opens along the longitudinal direction. The lower end of the cross rail 101 is fixed to, for example, a plurality of concrete sleepers 101b arranged on the ground along the Y direction. The shape and dimension of the concave groove 101a are provided so that the wheels of the mounting base 102, which will be described later, can rotate along the concave groove 101a.

The mounting base 102 mainly includes a mounting frame 102a, mounting rails 102b, wheels 102c, an electric motor (not shown), a battery (not shown), and the like. The mounting frame 102a is formed in a rectangular frame shape by, for example, an I-shaped steel member and is laid horizontally. The mounting rail 102b is fixed to the mounting frame 102a. The mounting rail 102b is formed in a groove rail similar to the rail 2 and is fixed in a pair to extend in the X direction with a predetermined length that allows the solar panel cleaning device PWM to be mounted. The mounting rails 102b are arranged to be aligned with the pair of rails 2. Two pairs of wheels 102c including rotary shafts (not shown) extending in the X direction are provided on the mounting base 102 side by side in the Y direction and are configured to rotate along the crossing rails 101. The wheels 102c are formed of, for example, rubber solid tires. In Fig. 8, the rotary shafts of a pair of wheels 102c on the left side are formed to be connected and integrally rotate. A driven sprocket (not shown) is integrally fixed to the rotary shaft.

The electric motor (not shown) equipped with an output shaft (not shown) extending along the X direction is mounted on the mounting base 102 and a drive sprocket (not shown) that transmits the driving force is integrally fixed to the output shaft. A roller chain (not shown) is mounted between the driven sprocket of the rotary shaft and the drive sprocket of the output shaft so that the rotational torque of the electric motor is transmitted to the pair of wheels 102c on the left side. The drive of the electric motor is controlled by the control device 40.

The mounting base 102 mounts the solar panel cleaning device PWM.

The mounting base 102 moves on the crossing rails 101 to align the mounting rails 102b with the rails 2 of the row in which the solar panel cleaning device PWM is moving. Then, the solar panel cleaning device PWM is mounted on the mounting base 102. Next, the wheels 102c are rotated to be aligned with the rails 2 of another row scheduled for cleaning work, and the solar panel cleaning device PWM (structural frame 3) is moved to the newly aligned rails 2. A position sensor 60 for detecting the position of the mounting base 102 is provided at a position corresponding to each rail 2 on the crossing rail 101 side, detects the position of the mounting base 102 on the crossing rails 101, and transmits the position to the control device 40. For example, when the mounting base 101 moves and the mounting rails 102b are aligned with the rails 2, the drive by the electric motor is turned off.

### (Operation)

The operation of the solar panel cleaning system 1 includes an operation for cleaning the solar panel SP, an operation for changing the tilt angle of the mount 8, and an operation for a lane change for changing the solar panel cleaning device PWM to another row.

### (Operation for Cleaning)

Cleaning of the solar panel SP is performed on a rainy day because rainwater is stored in the water catching unit 6 and used for cleaning. At the time of cleaning work, the operator confirms whether the tilt angle of the solar panel SP matches the tilt angle of the rotating brush 5 (10 degrees in the present embodiment). If the tilt angle of the solar panel SP does not match the tilt angle of the rotating brush 5, the tilt angle change described later is performed first.

When the tilt angle of the solar panel SP matches the tilt angle of the rotating brush 5, the operator positions the contacted portions 3fR and 3fL at the retracted position RP.

The control device energizes the electric motor 56 to rotate the rotating brush 5. The control device energizes the electric drive motor 42 of the moving device 4 to rotate the tires 41fR and 41fL to move the solar panel cleaning device PWM along the rails 2.

By such movement, the rotating brush 5 comes into contact with the end of the solar panel SP from the X direction. Since the tilt angle of the solar panel SP and the tilt angle of the rotating brush 5 are the same at 10 degrees, the solar panel SP and the rotating brush 5 come into contact with each other in a parallel state. Then, the hanging link member 9a swings in the direction opposite to the traveling direction of the solar panel cleaning device PWM by the abutted rotating brush 5, and the rotating brush 5 is moved upward. The moved rotating brush 5 rides on the solar panel SP, and the rotating brush 5 rotates while pressing the first, second, and third brush units 53, 54, and 55 against the surface of the solar panel SP by its own weight. The rainwater collected by the water catching unit 6 is poured into the first, second, and third brush units 53, 54, and 55 from each water pouring unit 7 and is used as cleaning water to raise dirt and wash away the dirt.

Next, the control device moves the solar panel cleaning device PWM to the adjacent solar panel unit USP along the rails 2 and cleans the adjacent solar panel unit USP in the same manner.

### (Operation for Changing Tilt Angle)

First, by using the retracting device 9c of the parallel link mechanism 9, as shown in Fig. 4, for example, the hanging link member 9a is swung to the right side and the locking plate member 9c1r of the rear hanging link member 9ar is engaged with the locked projection 9c2f of the front hanging link member 9af. As a result, the rotating brush 5 is moved upward and retracted so that the rotating brush 5 does not contact the solar panel SP.

For example, when the solar panel SP tilted by 10 degrees is tilted to the horizontal, the left side contacted portion 3fL is positioned at the angle change execution position EP in Fig. 1. The right side contacted portion 3fR is positioned at the retracted position RP.

Next, the control device energizes the electric drive motor 42 of the moving device 4 to rotate the tires 41fR and 41fL to move the solar panel cleaning device PWM along the rails 2. During the movement, as shown in Figs. 6 and 7, the wheel 866L of the contact portion comes into contact with the base portion of the arcuate surface 3f1 of the contacted portion 3fL.

Next, as the solar panel cleaning device PWM further moves, the wheel 866L rotates to climb the arcuate surface 3f1 such as (1) and the engaging recess 863L of the left side stopper member 86L is disengaged from the second lateral member 822. Here, although not shown, on the right side of the mount 8, the shallow engaging recess 864R of the right side stopper member 86R is disengaged from the first lateral member 821.

Next, as the solar panel cleaning device PWM further moves, the wheel 866L rotates the rotating rod member 851f and moves the rotating rod member 851f to the horizontal position. Then, the shallow engaging recess 864L of the left side stopper member 86L engages with the second lateral member 822.

Here, although not shown, on the right side of the mount 8, the engaging recess 863R of the right side stopper member 86R engages with the first lateral member 821. As a result, the rotating rod member 851f is positioned in the horizontal position and the solar panel unit USP is held in the horizontal position. Similarly, the adjacent solar panel unit USP along the rails 2 is tilted and held horizontally.

### (Operation for Lane Change)

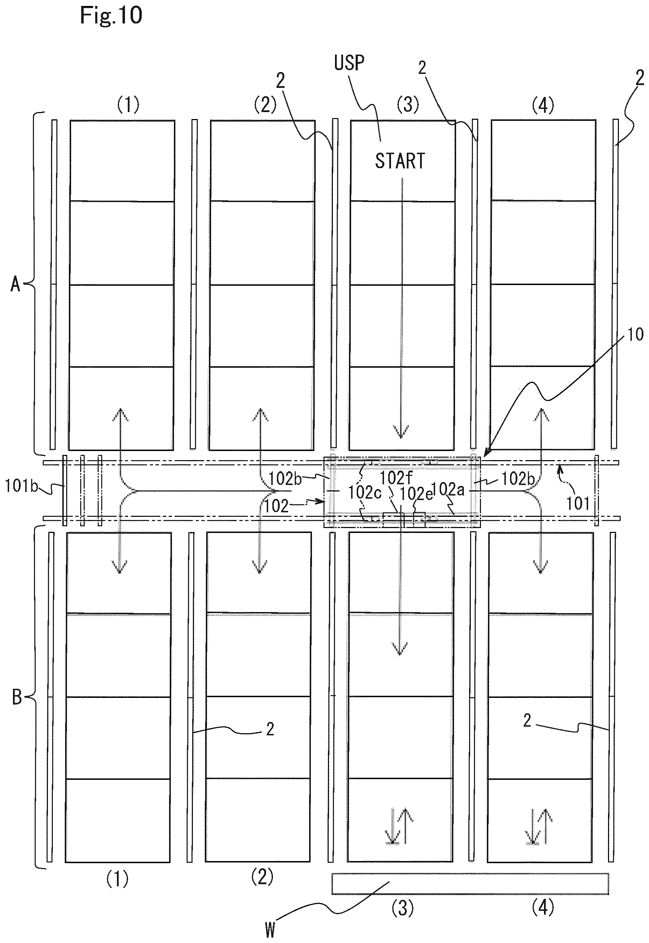

Next, as shown in Fig. 10, a case will be described in which a plurality of solar panel units USP arranged in four rows divided into A and B sections are lane-changed and cleaned.

First, all solar panel units USP are held at a cleanable 10-degree angle. The solar panel cleaning device PWM is arranged at one end (upper end in Fig. 10) of the third row of the A section.

Next, the control device drives the electric motor 102e to rotate the wheels 102c and moves the mounting base 102 to be aligned with the third row (lane) in which the solar panel cleaning device PWM is arranged. Here, the rails 2 and the mounting rails 102b are aligned to be arranged on the straight lines with each other.

Next, the control device drives the electric drive motor 42 to rotate the tires 41fR and 41fL to move the solar panel cleaning device PWM toward the arranged mounting base 102. Then, the solar panel cleaning device PWM is mounted on the mounting base 102 and the rotation of the tires 41fR, 41fL, 41rR, and 41rL is locked.

Next, the control device drives the electric motor 102e to rotate the wheels 102c to align the mounting base 102 on which the solar panel cleaning device PWM is mounted, for example, in the second row that needs cleaning (which row is selected is set in advance by a program, for example) .

Next, the control device drives the electric drive motor 42 to rotate the tires 41fR and 41fL to arrange the solar panel cleaning device PWM in the second row of the A section. Then, the solar panel units USP in the second row of the A section are cleaned.

Subsequently, the solar panel units USP are cleaned while changing the row in which the solar panel cleaning device PWM is arranged in the same manner.

As such, since the traverser device 10 is arranged between the A section and the B section in which the solar panel units USP are arranged into four rows divided into the A section and the B section, it is possible to efficiently provide the solar panel cleaning system 1 at a low cost with one traverser device 10. Even when the wall W exists in the premises of the other ends (lower end in Fig. 10) of the third and fourth rows of the B section of Fig. 10, the solar panel cleaning device PWM can revert on the wall side. Therefore, many solar panel units USP can be installed on the premises and the electromotive efficiency can be improved.

In the present embodiment, the case of cleaning while changing lanes has been described, but for example, after a typhoon, the tilt angle change and cleaning may be performed. Here, reciprocation is performed in one row. On the outward route, the tilt angle is changed to be able to perform cleaning by the tilt angle change, and the solar panel units USP are cleaned on the return route.

As is clear from the above description, the solar panel cleaning system 1 in the embodiment includes a plurality of solar panel units USP (solar panels) arranged in a row, a pair of rails 2 provided on both sides across the plurality of solar panel units USP and extending in the horizontal direction, and the double-column (gate-shaped) structural frame 3 movably supported on the rails 2 on both sides of the solar panel units USP and arranged to surround the upper surfaces of the solar panel units USP.

The solar panel cleaning system 1 further includes the moving device 4 for moving the structural frame 3 along the rails 2, the rotating brush 5 provided on the structural frame 3, having a rotation center extending in a direction intersecting the direction in which the plurality of solar panel units USP are arranged, and arranged to be able to come into contact with the upper surfaces of the solar panel units USP, the electric motor 56 provided on the structural frame 3 to rotate the rotating brush 5, the water catching unit 6 provided to spread over the upper surface of the structural frame 3 to collect rainwater at the time of rainfall, and the water pouring unit 7 for pouring the rainwater collected by the water catching unit 6 onto the rotating brush 5.

Accordingly, rainwater collected in a large catching area by the water catching unit 6 is poured into the rotating brush 5, and the rotating brush 5 is moved on the solar panel units USP while rotating. Therefore, the dirt adhering to the surface of the solar panel unit USP can be reliably removed by the rotating brush 5 that rotates while sufficient cleaning water is supplied with rainwater. Since the rainwater is stored by the water catching unit 6 provided in the structural frame 3, the load when the rainwater is stored is not applied to the solar panel unit USP, and deformation of the solar panel SP or damage to the panel surface can be prevented.

The mount 8 for supporting the solar panel unit USP to be capable of tilting in a virtual plane orthogonal to the X direction in which the plurality of solar panel units USP are arranged is further provided, in which the mount 8 includes the stopper members 86R and 86L and the first and second lateral members 821 and 822 (locking devices) that lock the tilt of the mount 8 at a plurality of locking positions to be able to be engaged and disengaged, and includes the contacted portions 3fR and 3fL and the wheels 866R and 866L (locking device operation unit) that are provided between the structural frame 3 and the mount 8 and move the locking position locked by the stopper members 86R and 86L and the first and second lateral members 821 and 822 (locking devices) to the next locking position, which is another locking position, in conjunction with the movement of the structural frame 3 by the moving device 4.

Accordingly, the tilt angle of the plurality of solar panel units USP supported by the mount 8 and arranged side by side can be easily changed by simply moving the structural frame 3.

The locking device operation unit includes the wheels 866R and 866L provided on one end side of the mount 8, and the contacted portions 3fR and 3fL that are provided on the structural frame 3 and include the arcuate surface 3f1 (inclined contact surface) that tilts the mount 8 by contacting the wheels 866R and 866L and raising the wheels 866R and 866L as the structural frame 3 moves.

Accordingly, the tilt angle of the solar panel unit USP supported by the mount 8 can be changed by a simple structure of raising one of the wheels 866R and 866L provided on one end side of the mount 8 by the contacted portions 3fR and 3fL that move as the structural frame 3 moves.

The rotating brush 5 is hung to be swingable from the structural frame 3 by the parallel link mechanism 9 in which the fixed node is fixed to the structural frame 3 and moves in parallel along the moving direction (X direction) of the structural frame 3.

Accordingly, the rotating brush 5 can be brought into contact with the solar panel unit USP only by the weight of a part of the parallel link mechanism 9, and the rotating brush 5 and the rotating brush 5 can be brought into contact with the solar panel unit USP at a constant angle. Therefore, stable cleaning work can be performed without imposing an unbalanced load on the solar panel unit USP.

The parallel link mechanism 9 is provided with the retracting device 9c that holds the rotating brush 5 away from the solar panel unit USP.

Accordingly, by holding the rotating brush 5 away from the solar panel unit USP, it is possible to move the structural frame 3 (solar panel cleaning device PWM) quickly when it is desired to move the structural frame 3 without cleaning.

The water catching unit 6 catches water for the projected area surrounded by the ceiling portion 3a5 of the structural frame 3.

Accordingly, abundant cleaning water can be supplied by capturing rainwater that falls on a wide area of the projected area surrounded by the ceiling portion 3a5 of the structural frame 3. Since the weight of the captured rainwater is received by the structural frame 3, the load is not imposed on the solar panel unit USP and deformation or damage of the solar panel SP can be prevented.

The rotating brush 5 includes the first rotary support shaft 51 and the second rotary support shaft 52 that are arranged in parallel with each other and rotatably supported, in which the first brush unit 53 is provided that protrudes in the radial direction of the first rotary support shaft 51 and is formed with a predetermined width in the axial direction, at the central portion of the first rotary support shaft 51; the second brush unit 54 is provided that protrudes in the radial direction of the second rotary support shaft 52 and is formed with a predetermined width in the axial direction to partially overlap the first brush unit 53, on one end side of the second rotary support shaft 52; and the third brush unit 55 is provided that protrudes in the radial direction of the second rotary support shaft 52 and is formed with a predetermined width in the axial direction to partially overlap the first brush unit 53, on the other end side of the second rotary support shaft 52.

Accordingly, since the solar panel unit USP is in line-contact at two positions of the first brush unit 53 around the first rotary support shaft 51, and the second brush unit 54 and the third brush unit 55 around the second rotary support shaft 52, stable cleaning work can be performed without the force applied by the rotating brush 5 escaping. Since the second brush unit 54 and the third brush unit 55 partially overlap the first brush unit 53, it is possible to prevent cleaning leakage.

When a plurality of solar panel units USP are arranged in a plurality of rows, the traverser device 10 is further provided, the traverser device 10 including a pair of crossing rails 101 orthogonal to the rails 2 provided in each row of the plurality of solar panel units USP, and the mounting base 102 that mounts the structural frame 3 and moves on the crossing rails 101 so that the mounted structural frame 3 is aligned with the rails 2 in any other row.

Accordingly, when a plurality of solar panel units USP are arranged in a plurality of rows, the structural frame 3 (solar panel cleaning device PWM) can be quickly and surely moved to another row of the solar panel units USP by the traverser device 10.

In the above embodiment, the mount is tilted between 0 degrees and 10 degrees but the present invention is not limited thereto. For example, the mount may be tilted at 0 degrees, 10 degrees, 20 degrees, and 30 degrees for the tilt angle change. As a mount that tilts at 0 degrees, 10 degrees, 20 degrees, and 30 degrees, for example, the solar panel mount described in International Publication No. 2016/185555 can be used. When using the above solar panel mount, the contacted portion with a height that can be tilted to 20 degrees and 30 degrees can be positioned at the angle change execution position, and thus the mount can be tilted at 0 degrees, 10 degrees, 20 degrees, and 30 degrees.

The rotating brush 5 is composed of two rotary support shafts of the first rotary support shaft 51 and the second rotary support shaft 52 which are arranged in parallel with each other and rotatably supported, but the present invention is not limited thereto. For example, a third rotary support shaft may be further provided in parallel with the first rotary support shaft and the second rotary support shaft, and brush units composed of three rotary support shafts may be formed, respectively.

The first, second, and third brush units 53, 54, and 55 have a large number of polypropylene straight bristles protruding in the radial direction, but the present invention is not limited thereto and, for example, the brush units may be formed of sponge material, cloth material, or the like.

The rail 2 is the concave groove 2a, but the present invention is not limited thereto and, for example, a rail made of an I-shaped steel member may be used. Here, steel wheels can be used instead of tires.

As described above, the specific configuration described in the above-described embodiment is merely an example of the present invention, the present invention is not limited to such a specific configuration, and various aspects can be adopted without departing from the scope of the present invention.

### Industrial Applicability

It can be used in fields where it is necessary to efficiently and reliably clean a large number of arranged solar panels.

### Reference Signs List

1 ... solar panel cleaning system, 2 ... rail, 3 ... structural frame, 3a5 ... ceiling portion, 3fL, 3fR ... contacted portion (locking device operation unit), 3f1 ... arcuate surface (inclined contact surface), 4 ... moving device, 5 ... rotating brush, 51 ... first rotary support shaft, 52 ... second rotary support shaft, 53 ... first brush unit, 54 ... second brush unit, 55 ... third brush unit, 56 ... electric motor (drive device), 6 ... water catching unit, 7 ... water pouring unit, 8 ... mount, 821 ... first lateral member (locking device), 822 ... second lateral member (locking device), 86R, 86L ... stopper member (locking device), 866L, 866R ... wheel (contact portion and locking device operation unit), 9 ... parallel link mechanism, 9c ... retracting device, 10 ... traverser device, 101 ... crossing rail, 102 ... mounting base, 102b ... mounting rail, EP ... angle change execution position, RP ... retracted position, PWM ... solar panel cleaning device.

## Claims

1. A solar panel cleaning system (1) comprising:
a plurality of solar panels (SP) arranged in a row;
a pair of rails (2) extending along the direction in which the plurality of solar panels (SP) are arranged, and provided on both sides across the solar panels (SP);
a double-column structural frame (3) movably supported on the rails (2) on both sides of the solar panels (SP) and arranged to surround the upper surfaces of the solar panels (SP) ;
a moving device (4) for moving the structural frame (3) along the rails (2);
a rotating brush (5) provided on the structural frame (3), having a rotation center extending in a direction intersecting the direction in which the plurality of solar panels (SP) are arranged, and arranged to be able to come into contact with the upper surfaces of the solar panels (SP); and
a drive device (56) provided on the structural frame (3) to rotate the rotating brush (3), **characterized by** comprising
a water catching unit (6) provided to spread over the upper surface of the structural frame (3) to collect rainwater at the time of rainfall;
a water pouring unit (7) for pouring the rainwater collected by the water catching unit (6) into the rotating brush (5); and
a mount (8) for supporting the solar panels (SP) to be capable of tilting in a virtual plane orthogonal to the direction in which the plurality of solar panels (SP) are arranged, wherein
the mount (8) includes a locking device (821, 822, 86R, 86L) for locking the tilt of the mount (8) at a plurality of locking positions to be able to be engaged and disengaged, and
the solar panel cleaning system (1) includes a locking device operation unit provided between the structural frame (3) and the mount (8), and moving the locking position locked by the locking device (821, 822, 86R, 86L) to the next locking position, which is another locking position, in conjunction with the movement of the structural frame (3) by the moving device (4).

2. The solar panel cleaning system (1) according to claim 1, wherein
the locking device operation unit includes
a contact portion (866L, 866R) provided on one end side of the mount (8), and
a contacted portion (3fL, 3fR) provided on the structural frame (3) and provided with an inclined contact surface (3f1) for tilting the mount (8) by contacting the contact portion (866L, 866R) and raising the contact portion (866L, 866R) as the structural frame (3) moves.

3. The solar panel cleaning system (1) according to claim 1 or 2, wherein
the rotating brush (5) is hung to be swingable from the structural frame (3) by a parallel link mechanism (9) in which a fixed node is fixed to the structural frame (3) and moves in parallel along the moving direction of the structural frame.

4. The solar panel cleaning system (1) according to claim 3, wherein
the parallel link mechanism (9) is provided with a retracting device (9c) for holding the rotating brush (5) away from the solar panels (SP).

5. The solar panel cleaning system (1) according to claim 1, wherein
the water catching unit (6) catches water for a projected area surrounded by a ceiling portion (3a5) of the structural frame (3).

6. The solar panel cleaning system (1) according to claim 3, wherein
the rotating brush (5) includes a first rotary support shaft (51) and a second rotary support shaft (52) arranged parallel to each other and rotatably supported,
a first brush unit (53) that protrudes in the radial direction of the first rotary support shaft (51) and is formed with a predetermined width in the axial direction is provided at the center of the first rotary support shaft (51),
a second brush unit (54) that protrudes in the radial direction of the second rotary support shaft (52) and is formed with a predetermined width in the axial direction to partially overlap the first brush unit (53) is provided on one end side of the second rotary support shaft (52), and
a third brush (55) unit that protrudes in the radial direction of the second rotary support shaft (52) and is formed with a predetermined width in the axial direction to partially overlap the first brush unit (53) is provided on the other end side of the second rotary support shaft (52).

7. The solar panel cleaning system (1) according to any one of claims 1 to 6, further comprising
when the plurality of solar panels (SP) are arranged in a plurality of rows,
a traverser device (10) including:
a pair of crossing rails (101) orthogonal to the rails (2) provided in the respective rows of the plurality of solar panels (SP); and
a mounting base (102) that mounts the structural frame (3) and moves on the cross rails (101) so that the mounted structural frame (3) is aligned with the rails (2) in any other row.

## Patentansprüche

1. Reinigungssystem (1) für Solarpaneele, mit:
einer Vielzahl von in einer Reihe angeordneten Solarpaneelen (SP);
zwei Schienen (2), die sich in der Richtung erstrecken, in der die Vielzahl von Solarpaneelen (SP) angeordnet ist, und die auf beiden Seiten über die Solarpaneele (SP) vorgesehen sind;
einer zweisäuligen Rahmenkonstruktion (3), der beweglich auf den Schienen (2) auf beiden Seiten der Solarpaneele (SP) getragen wird und so angeordnet ist, dass er die oberen Flächen der Solarpaneele (SP) umgibt;
einer Bewegungsvorrichtung (4) zum Bewegen der Rahmenkonstruktion (3) entlang der Schienen (2);
einer rotierenden Bürste (5), die an der Rahmenkonstruktion (3) vorgesehen ist, mit einer Rotationsachse, die sich in einer Richtung erstreckt, die die Richtung schneidet, in der die Vielzahl von Solarpaneelen (SP) angeordnet ist, und die so angeordnet ist, dass sie mit den oberen Flächen der Solarpaneele (SP) in Kontakt kommen kann; und
einer Antriebsvorrichtung (56), die an der Rahmenkonstruktion (3) vorgesehen ist, um die rotierende Bürste (5) zu drehen, **dadurch gekennzeichnet, dass** es Folgendes umfasst:
eine Wasserauffangeinheit (6), die so vorgesehen ist, dass sie sich über die obere Fläche der Rahmenkonstruktion (3) ausbreitet, um Regenwasser zu sammeln, wenn es regnet;
eine Wasserabgabeeinheit (7) zum Abgeben des von der Wasserauffangeinheit (6) gesammelten Regenwassers in die rotierende Bürste (5); und
eine Halterung (8) zum Halten der Solarpaneele (SP) so, dass sie in einer virtuellen Ebene orthogonal zu der Richtung neigbar sind, in der die Vielzahl von Solarpaneelen (SP) angeordnet sind, wobei
die Halterung (8) eine Verriegelungsvorrichtung (821, 822, 86R, 86L) zum Verriegeln der Neigung der Halterung (8) in einer Vielzahl von Verriegelungspositionen umfasst, die in Eingriff und außer Eingriff gebracht werden können, und
das Reinigungssystem (1) für Solarpaneele eine Betätigungseinheit für eine Verriegelungsvorrichtung umfasst, die zwischen der Rahmenkonstruktion (3) und der Halterung (8) vorgesehen ist, und die Verriegelungsposition, die durch die Verriegelungsvorrichtung (821, 822, 86R, 86L) verriegelt ist, in Verbindung mit der Bewegung der Rahmenkonstruktion (3) durch die Bewegungsvorrichtung (4) in die nächste Verriegelungsposition bewegt, die eine weitere Verriegelungsposition ist.

2. Reinigungssystem (1) für Solarpaneele nach Anspruch 1, wobei die Betätigungseinheit der Verriegelungsvorrichtung Folgendes umfasst:
einen berührenden Abschnitt (866L, 866R), der an einer Endseite der Halterung (8) vorgesehen ist, und
einen berührten Abschnitt (3fL, 3fR), der an der Rahmenkonstruktion (3) vorgesehen ist und mit einer geneigten Kontaktfläche (3f1) zum Kippen der Halterung (8) durch Kontaktieren des berührenden Abschnitts (866L, 866R) und Anheben des berührenden Abschnitts (866L, 866R) bei Bewegung der Rahmenkonstruktion (3) versehen ist.

3. Reinigungssystem (1) für Solarpaneele nach Anspruch 1 oder 2, wobei
die rotierende Bürste (5) durch einen Parallelführungsmechanismus (9), bei dem ein fester Knotenpunkt an der Rahmenkonstruktion (3) befestigt ist und sich parallel zur Bewegungsrichtung der Rahmenkonstruktion bewegt, schwenkbar an der Rahmenkonstruktion (3) aufgehängt ist.

4. Reinigungssystem (1) für Solarpaneele nach Anspruch 3, wobei
der Parallelführungsmechanismus (9) eine Rückzugsvorrichtung (9c) aufweist, um die rotierende Bürste (5) von den Solarpaneelen (SP) fernzuhalten.

5. Reinigungssystem (1) für Solarpaneele nach Anspruch 1, wobei
die Wasserauffangeinheit (6) Wasser für einen vorstehenden Bereich auffängt, der von einem Deckenabschnitt (3a5) der Rahmenkonstruktion (3) umgeben ist.

6. Reinigungssystem (1) für Solarpaneele nach Anspruch 3, wobei
die rotierende Bürste (5) eine erste drehende Lagerwelle (51) und eine zweite drehende Lagerwelle (52) aufweist, die parallel zueinander angeordnet und drehbar gelagert sind,
eine erste Bürsteneinheit (53), die in radialer Richtung der ersten drehenden Lagerwelle (51) vorsteht und mit einer vorab festgelegten Breite in axialer Richtung ausgebildet ist, in der Mitte der ersten drehenden Lagerwelle (51) vorgesehen ist,
eine zweite Bürsteneinheit (54), die in der radialen Richtung der zweiten drehenden Lagerwelle (52) vorsteht und mit einer vorab festgelegten Breite in der axialen Richtung ausgebildet ist, um die erste Bürsteneinheit (53) teilweise zu überlappen, an einer Endseite der zweiten drehenden Lagerwelle (52) vorgesehen ist, und
eine dritte Bürsteneinheit (55), die in der radialen Richtung der zweiten drehenden Lagerwelle (52) vorsteht und mit einer vorbestimmten Breite in der axialen Richtung ausgebildet ist, um die erste Bürsteneinheit (53) teilweise zu überlappen, an der anderen Endseite der zweiten drehenden Lagerwelle (52) vorgesehen ist.

7. Reinigungssystem (1) für Solarpaneele nach einem der Ansprüche 1 bis 6, die,
wenn die mehreren Solarpaneele (SP) in mehreren Reihen angeordnet sind, zudem Folgendes umfasst:
eine Querungsvorrichtung (10) mit:
einem Paar Querschienen (101), die orthogonal zu den Schienen (2) verlaufen, die in den jeweiligen Reihen der Vielzahl von Solarpaneelen (SP) vorgesehen sind; und
einem Montagesockel (102), der die Rahmenkonstruktion (3) aufnimmt und sich auf den Querschienen (101) so bewegt, dass die montierte Rahmenkonstruktion (3) in einer beliebigen anderen Reihe zu den Schienen (2) ausgerichtet ist.

## Revendications

1. Système de nettoyage de panneaux solaires (1) comprenant :
une pluralité de panneaux solaires (SP) agencés en rangée ;
une paire de rails (2) s'étendant le long de la direction dans laquelle la pluralité de panneaux solaires (SP) sont agencés, et prévus des deux côtés à travers les panneaux solaires (SP) ;
un cadre structurel à double colonne (3) supporté de manière mobile sur les rails (2) des deux côtés des panneaux solaires (SP) et agencé pour entourer les surfaces supérieures des panneaux solaires (SP) ;
un dispositif mobile (4) pour déplacer le cadre structurel (3) le long des rails (2) ;
une brosse rotative (5) agencée sur le cadre structurel (3), présentant un centre de rotation s'étendant dans une direction coupant la direction dans laquelle la pluralité de panneaux solaires (SP) sont agencés, et agencée pour pouvoir entrer en contact avec les surfaces supérieures des panneaux solaires (SP) ; et
un dispositif d'entraînement (56) prévu sur le cadre structurel (3) pour faire tourner la brosse rotative (3), **caractérisé en ce qu'**il comprend
une unité de récupération d'eau (6) prévue pour se répandre sur la surface supérieure du cadre structurel (3) pour collecter l'eau de pluie au moment de la pluie ;
une unité de versement d'eau (7) pour verser l'eau de pluie collectée par l'unité de récupération d'eau (6) dans la brosse rotative (5) ; et
un support (8) destiné à supporter les panneaux solaires (SP) pour pouvoir s'incliner dans un plan virtuel orthogonal à la direction dans laquelle la pluralité de panneaux solaires (SP) sont agencés, dans lequel
le support (8) inclut un dispositif de verrouillage (821, 822, 86R, 86L) pour verrouiller l'inclinaison du support (8) au niveau d'une pluralité de positions de verrouillage pour pouvoir s'engager et se désengager, et
le système de nettoyage de panneau solaire (1) inclut une unité de fonctionnement de dispositif de verrouillage disposée entre le cadre structurel (3) et le support (8), et déplaçant la position de verrouillage verrouillée par le dispositif de verrouillage (821, 822, 86R, 86L) vers la position de verrouillage suivante, qui est une autre position de verrouillage, conjointement avec le mouvement du cadre structurel (3) par le dispositif mobile (4).

2. Système de nettoyage de panneaux solaires (1) selon la revendication 1, dans lequel
l'unité de fonctionnement de dispositif de verrouillage inclut
une partie de contact (866L, 866R) prévue sur un côté d'extrémité du support (8), et
une partie en contact (3fL, 3fR) prévue sur le cadre structurel (3) et dotée d'une surface de contact inclinée (3f1) pour incliner le support (8) en entrant en contact avec la partie de contact (866L, 866R) et en soulevant la partie de contact (866L, 866R) lorsque le cadre structurel (3) se déplace.

3. Système de nettoyage de panneaux solaires (1) selon la revendication 1 ou 2, dans lequel
la brosse rotative (5) est suspendue de manière à pouvoir osciller depuis le cadre structurel (3) par un mécanisme à liaison parallèle (9) dans lequel un noeud fixe est fixé au cadre structurel (3) et se déplace parallèlement le long de la direction de déplacement du cadre structurel.

4. Système de nettoyage de panneaux solaires (1) selon la revendication 3, dans lequel
le mécanisme de liaison parallèle (9) est doté d'un dispositif de rétraction (9c) pour maintenir la brosse rotative (5) à l'écart des panneaux solaires (SP).

5. Système de nettoyage de panneaux solaires (1) selon la revendication 1, dans lequel
l'unité de récupération d'eau (6) récupère l'eau pour une zone projetée entourée par une partie de plafond (3a5) du cadre structurel (3).

6. Système de nettoyage de panneaux solaires (1) selon la revendication 3, dans lequel
la brosse rotative (5) inclut un premier arbre de support rotatif (51) et un second arbre de support rotatif (52) agencés parallèlement l'un à l'autre et supportés de manière rotative,
une première unité de brosse (53) qui fait saillie dans la direction radiale du premier arbre de support rotatif (51) et est formée avec une largeur prédéterminée dans la direction axiale est prévue au centre du premier arbre de support rotatif (51),
une deuxième unité de brosse (54) qui fait saillie dans la direction radiale du second arbre de support rotatif (52) et est formée avec une largeur prédéterminée dans la direction axiale pour chevaucher partiellement la première unité de brosse (53) est prévue sur un côté d'extrémité du second arbre de support rotatif (52), et
une troisième unité de brosse (55) qui fait saillie dans la direction radiale du second arbre de support rotatif (52) et est formée avec une largeur prédéterminée dans la direction axiale pour chevaucher partiellement la première unité de brosse (53) est prévue sur l'autre côté d'extrémité du second arbre de support rotatif (52).

7. Système de nettoyage de panneaux solaires (1) selon l'une quelconque des revendications 1 à 6, comprenant en outre
lorsque la pluralité de panneaux solaires (SP) sont agencés en une pluralité de rangées,
un dispositif traversant (10) incluant :
une paire de rails traversants (101) orthogonaux aux rails (2) prévus dans les rangées respectives de la pluralité de panneaux solaires (SP) ; et
une base de montage (102) qui monte le cadre structurel (3) et se déplace sur les rails transversaux (101) de sorte que le cadre structurel monté (3) soit aligné avec les rails (2) dans n'importe quelle autre rangée.
